# EUROPÄISCHE PATENTSCHRIFT

(11) **EP 2 293 897 B1**
(45) Veröffentlichungstag und Bekanntmachung des Hinweises auf die Patenterteilung: **04.01.2017**
(21) Anmeldenummer: 08773600.5
(22) Anmeldetag: 24.06.2008
(51) Int. Cl.: B23P 19/04, B25B 27/00, B60N 2/58

(54) **VERFAHREN UND VORRICHTUNG ZUM EINFÄDELN EINES AM RAND EINES FLEXIBLEN FLÄCHENGEBILDES FESTGELEGTEN KEDERS IN EINE KEDERNUT**
METHOD AND DEVICE FOR THREADING A WEATHERSTRIP FIXED TO THE EDGE OF A FLEXIBLE SHEET MATERIAL INTO A WEATHERSTRIP CHANNEL
PROCÉDÉ ET DISPOSITIF POUR ENFILER UNE CLAVETTE FIXÉE SUR LE BORD D UN PRODUIT PLAT SOUPLE DANS UNE RAINURE DE CLAVETTE

(43) Veröffentlichungstag der Anmeldung: 16.03.2011
(73) Patentinhaber: Bayerische Motoren Werke Aktiengesellschaft, 80809 München (DE)
(72) Erfinder: ERHARDT, Gerhard, 83278 Traunstein (DE)
(86) Internationale Anmeldenummer: PCT/EP2008/005082
(87) Internationale Veröffentlichungsnummer: WO 2009/155940

(56) Entgegenhaltungen:
- DE-A1- 19 630 753
- DE-A1-102007 006 098
- FR-A- 2 483 287
- FR-A- 2 899 531
- FR-A- 2 905 317

## Beschreibung

### Technisches Gebiet

Die Erfindung betrifft ein Verfahren und eine Vorrichtung zum Einfädeln eines am Rand eines flexiblen Flächengebildes festgelegten Keders quer zur Längsrichtung in eine Kedernut.

Keder bestehen aus weitgehend formbeständigen, jedoch biegbaren Plastikstäben, die an den Rand von textilen Flächengebilden angeformt sind und es ermöglichen, den Rand unverrückbar in einer Kedernut festzulegen. Sie haben im allgemeinen ein rundes Profil, können aber auch von abweichendem Querschnitt sein.

Eine Anwendung für die Verwendung eines Keders ergibt sich z.B. bei der Festlegung des Bezugsstoffes eines Autositzes am unteren Rand einer aus einem Kunststoffmaterial bestehenden Sitzschale, auf die ein Schaumstoffkissen lose aufgelegt ist. Die nach unten geöffnete Kedernut bildet dabei einen Bestandteil des Kunststoffformteils. Sie umschließt den Autositz auf dem gesamten Umfang. Die Kedernut hat keine stirnseitige Öffnung. Ein Einschieben des Keders parallel zu seiner Längsrichtung in die Kedernut ist daher nicht möglich.

### Stand der Technik

Nach dem Stand der Technik wird der Keder bei einer solchen Anwendung mit Zangen oder manuell erfasst und senkrecht zur Öffnungsrichtung in die Mündung der Kedernut eingepresst und elastisch darin eingeschnappt. Das Verfahren ist sehr arbeitsintensiv, weil der Arbeitsvorgang über die Länge der Kedernut verteilt in kurzen Abständen häufig wiederholt werden muss.

Die FR-A-2483 287 wird als nächstliegender Stand der Technik angesehen und zeigt ein Verfahren und eine Vorrichtung zum Aufbringen von Zierleisten auf Verkleidungsteile, wie beispielsweise Stoßstangen, gemäß den Oberbegriffen der Ansprüche 1 und 4.

Die DE 196 30 753 A1 zeigt eine Vorrichtung zur Montage eines Kederprofils in einer Nut eines Trägermaterials, wobei das Kederprofil als langgestrecktes Strangprofil ausgebildet ist und durch Druckeinwirkung in die Nut einpressbar ist. Darüber hinaus sind zwei Rollen offenbart, die um ihre Achsen quer zur Längserstreckung des Kederprofils drehbar gelagert sind und in Längsrichtung des Kederprofils bewegbar sind, so dass eine erste Rolle gegen einen Steg und eine zweite Rolle gegen einen Kopf des Kederprofils drückt, wodurch dieser fortschreitend in die Nut hineingepresst wird.

Aus der FR-A-2 899 531 ist ein Fahrzeugsitz bekannt mit einer Polsterung, einer Verankerung, einem die Polsterung bedeckenden Überzug und einer Befestigungsvorrichtung zum Befestigen des Überzugs an der Polsterung oder an der Verankerung, wobei eine formschlüssige Verbindung hergestellt wird.

### Darstellung der Erfindung

Der Erfindung liegt die Aufgabe zu Grunde, ein solches Verfahren und eine zu seiner Durchführung geeignete Vorrichtung zu zeigen, die ein weitgehend automatisches Einfädeln des Keders in die Kedernut ermöglicht.

Diese Aufgabe wird erfindungsgemäß bei einem Verfahren nach dem Oberbegriff durch die kennzeichnenden Merkmale von Anspruch 1 gelöst. Auf vorteilhafte Weiterbildungen nehmen die Unteransprüche Bezug.

Das erfindungsgemäße Verfahren zum Einfädeln eines am Rand eines flexiblen Flächengebildes festgelegten Keders quer zur Längsachse in eine Kedernut, die im Bereich Ihrer Mündung mit einer Verengung versehen ist, ist dadurch charakterisiert, dass der Keder im mittleren Bereich der Länge der Kedernut unter temporärer, elastischer Aufweitung der Mündung der Kedernut in die Kedemut eingeschnappt wird und dass der Keder anschließend, von dieser Stelle ausgehend, zugleich in den beiden einander entgegensetzten Richtungen A, B fortschreitend in die übrigen Bereiche der Kedernut eingedrückt und eingeschnappt wird. Der mittlere Bereich muss nicht unbedingt in der geometrischen Mitte der Länge der Kedernut angeordnet sein sondern in Abhängigkeit von der geometrischen Gestaltung der Eckbereiche kann auch eine andere Positionierung in Betracht zu ziehen sein. Wichtig ist jedoch, dass durch die in den beiden entgegengesetzten Richtungen von diesem Bereich fortschreitende Einfügebewegung sich die.auf den Keder ausgeübten Schubkräfte in Längsrichtung gegenseitig aufheben. Trotz eines linear fortschreitenden Einfügeprozesses ist daher nicht zu befürchten, dass sich durch den Einfügeprozess eine unerwünschte Relatiwerlagerung des Keders in der Kedernut ergibt. Der Sitz z. B. eines Bezugstoffes auf einem Autositz ist dadurch sehr genau vorherbestimmbar und das Auftreten von Falten wird vermieden.

Der Keder kann im mittleren Bereich der Länge der Kedernut mit Hilfe einer Zange in die Kedernut eingefügt und ausgehend von dieser Stelle mit Hilfe von Rollen in den beiden einander entgegensetzten Richtungen A, B fortschreitend in die übrigen Bereiche der Kedernut eingedrückt und eingeschnappt werden. Die beim Einfügen auf den Keder ausgeübten Zugkräfte lassen sich dadurch vermindern, was dem Auftreten von unerwünschten Relativverschiebungen noch besser entgegenwirkt.

Um dennoch die für das fortschreitende Einfügen des Keders nötige Vortriebsbewegung zu erhalten, hat es sich als vorteilhaft bewährt, wenn die Rollen motorisch angetrieben werden.

Der Erfindung liegt die weitere Aufgabe zu Grunde, eine Vorrichtung zum Einfädeln eines am Rand eines flexiblen Flächengebildes festgelegten Keders quer zur Längsrichtung in eine Kedernut zu zeigen, die im Bereich Ihrer Mündung mit einer Verengung versehen ist, wobei die Vorrichtung einfach und robust aufgebaut ist und eine schnelles und definiertes Einfügen eines Keders in die Kedernut erlaubt.

Diese Aufgabe wird dadurch gelöst, dass eine motorisch angetriebene, signalbetätigbare Zange zum Ergreifen und mittigen Einfügen des Keders in die Kedernut vorgesehen ist, dass in einem Abstand vor der Mündung der Kedernut eine sich parallel zu deren Längsrichtung erstreckende Andrückschiene angeordnet ist, dass auf der Andrückschiene zwei relativ verschiebbare Eindrückvorrichtungen gelagert sind und dass die Eindrückvorrichtungen zumindest ein Eindrückelement umfassen, dass es erlaubt, den Keder fortschreitend in die Kedernut einzudrücken und einen Antrieb, der es erlaubt, die Andrückkörper von einer zentralen Stelle ausgehend über die ganze Länge der Mündung der Kedernut hinwegzuführen. Die motorisch angetriebene Zange kann elektromotorisch, pneumatisch oder hydraulisch bewegbar sein.

Der Einfügevorgang beginnt somit an einer zentralen Stelle der Kedernut, in dem der Keder von der zweckmäßig taktgesteuert motorisch angetriebenen Zange erfasst und unter Kaftaufwendung und Überwindung der elastischen Gegenkräfte der Kedernut durch die Verengung der Mündung hindurchgepresst und in die Kedernut eingefügt wird. Die Zange wird anschließend senkrecht nach unten gezogen und entfernt, während der Keder in der erreichten Position verharrt. Die Kedernut kann zur Vereinfachung des Einfügens an der vorgesehenen Stelle auch mit einer seitlichen Durchbrechung versehen sein, in die die den Keder haltende Zange einfügbar ist.

Im Anschluss daran werden die Eindrückvorrichtungen beiderseits der vorherigen Position Zange auf den eingedrückten Keder aufgesetzt und angedrückt, bis der Keder durchgehend am Boden der Kedernut anliegt. Die Eindrückvorrichtüngen werden in anschließend in Längsrichtung der Kedernut fortschreitend über deren Mündung hinweggeführt, wobei der Keder fortschreitend in die Kedernut eingefädelt, bodenschlüssig angedrückt und in der Kedernut durch Einschnappen der Wangen der Kedernut festgelegt wird. Die Mündung der Kedernut ist zu diesem Zwecke zweckmäßig auf einer Seite mit zumindest einer nach innen vorstehenden Nase versehen, hinter der der Keder einschnappbar ist. Es besteht auch die Möglichkeit, in dichten Abständen aufeinanderfolgend eine Vielzahl von Nasen vorzusehen, die zumindest einseitig in die Kedernut vorstehen und die Mündung elastisch nachgiebig verengen. Die Nasen können in sich elastisch nachgiebig ausgebildet sein und/oder auf den elastisch verformbaren Wangen der Kedernut angeordnet sein. Sie sind zweckmäßig einstückig mit den Wangen ausgebildet.

Das Eindrückelement, dass das fortschreitende Einschnappen des Keders in die Kedernut bewirkt, kann im einfachsten Fall durch eine Gleitkufe gebildet sein.

Wegen der geringeren Reibungskräfte gelangt vorteilhaft ein Andrückelement zur Anwendung, das durch eine Rolle gebildet ist.

Die Rolle kann im Bereich des Außenumfangs mit einer sich quer zur Umfangsrichtung erstreckenden Zahnung versehen sein, um sie zugleich als Antriebsrolle für die Vorwärtsbewegung des Andrückelementes verwenden zu können. Axial gerichtete Relativkräfte werden bei einer solchen Ausbildung von der Kedernut ferngehalten, was das Auftreten von Relativverschiebungen des Keders in der Kedernut vermeidet.

Die Eindrückvorrictitungen können jeweils durch zwei in Bewegungsrichtung hintereinander angeordnete Stützrollen auf der Eindrückschiene geführt und abgestützt sein, um sie in statischer Hinsicht zu stabilisieren und undefinierte Relativbewegungen zu verhindern.

Die Eindrückschiene kann eine Zahnstange und die Eindrückvorrichtungen ein Zahnrad umfassen, das mit der Zahnstange in Eingriff steht, um die beim Fügeprozess auftretenden Vorschubkräfte zugleich auf die Eindrückschiene übertragen zu können. Das Zahnrad und die Stützrollen können dabei unverdrehbar verbunden sein.

Bei einer Ausführung, bei der dem das Andruckelement durch eine Rolle gebildet ist, hat es sich als vorteilhaft bewährt, wenn die das Einfügen bewirkende Rolle durch das Zahnrad verdrehbar ist.

Die Eindrückvorrichtungen können durch Motoren verschiebbar sein, wobei die Motoren durch signalbetätigbare Elektromotoren gebildet sein können, die einen Bestandteil der Eindrückvorrichtungen bilden.

### Kurzbeschreibung der Zeichnung

Eine beispielhafte Ausführung der Erfindung ist in der beiliegenden Zeichnung dargestellt. Sie wird nachfolgend näher erläutert

Es zeigen:
Fig. 1 eine Vorrichtung zu Beginn des Einfädelungsvorgangs in perspektivischer Ansicht
Fig. 2 den Vorgang des Erfassens des Keders durch die Zange zu Beginn des Einfädelungsvorgangs quergeschnittner Darstellung
Fig. 3 Das Einfügen des Keders durch die Zange in die Kedernut
Fig. 4 das Aufsetzen der Eindrückvorrichtungen auf den in die Kedernut eingefügten Keder
Fig. 5 in quergeschnittner Darstellung das Aufsetzen der Eindrückvorrichtungen auf den in die Kedernut eingefügten Keder
Fig. 6 eine auf die Andrückschiene aufgesetzte Eindrückvorrichtung in betriebsbereitem Zustand

### Ausführung der Erfindung

Das Verfahren dient zum Einfädeln eines am Rand eines flexiblen Flächengebildes 1 festgelegten Keders 2 quer zur Längsrichtung in eine Kedernut 3, die im Bereich Ihrer Mündung 4 mit einer Verengung versehen ist. Die Verengung wird durch eine einseitig in die Kedernut 3 vorstehende Nase des Kunststoffformteils gebildet, das die Kedernut 3 enthält. Die Kedernut 3 hat daher an der Mündung eine Weite, die kleiner ist als der Durchmesser des darin einzufügenden Keders 2. Sie kann aber elastisch derart aufgeweitet werden, dass der Keder 2 darin elastisch einschnappbar und dauerhaft festlegbar ist.

Der Keder 2 besteht aus einem runden Kunststoffstab, der am Rand eines flexiblen, textilen Flächengebildes festgelegt ist.

Zum Einfügen des Keders 2 in die Kedernut 3 wird der Keder 2 im mittleren Bereich der Länge der Kedernut 3 unter temporärer, elastischer Aufweitung der Mündung 4 der Kedernut 3 in die Kedernut 3 eingeschnappt, wonach der Keder 2 anschließend, von dieser Stelle ausgehend, zugleich in den beiden einander entgegensetzten Richtungen A, B fortschreitend in die übrigen Bereiche der Kedernut 3 eingeschnappt wird.

Der Keder 2 kann im mittleren Bereich der Länge der Kedernut 3 mit Hilfe einer Zange 5 in die Kedernut 3 eingefügt und ausgehend von dieser Stelle mit Hilfe von Rollen 6 in den beiden einander entgegensetzten Richtungen A, B fortschreitend in die übrigen Bereiche der Kedernut 3 eingeschnappt werden, wie in den Fig. gezeigt. Die dabei zur Anwendung gelangenden Rollen 6 werden zweckmäßig motorisch angetrieben.

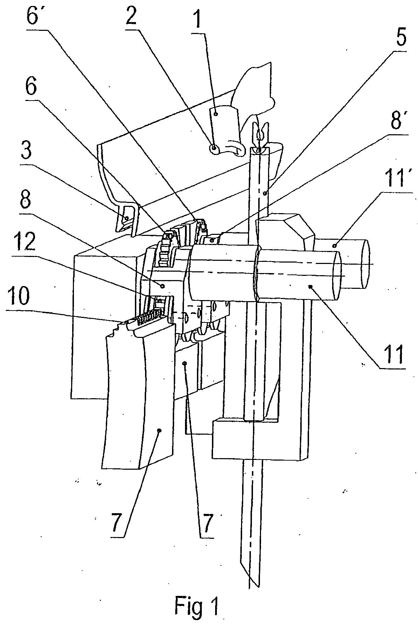

Zur Durchführung des Verfahrens hat sich vor allem eine Vorrichtung bewährt, bei der eine motorisch angetriebene, signalbetätigbare Zange 5 zum Ergreifen und mittigen Einfügen des Keders 2 in die Kedernut 3 vorgesehen ist (Fig.1), wobei in einem Abstand vor der Mündung 4 der Kedernut 3 eine sich parallel zu deren Längsrichtung erstreckende Andrückschiene 7 angeordnet ist, wobei auf der Andrückschiene 7 zwei relativ verschiebbare Eindrückvorrichtungen 8, 8' gelagert sind und wobei die Eindrückvorrichtungen 8, 8' zumindest ein Eindrückelement umfassen, dass es erlaubt, den Keder 2 fortschreitend in die Kedernut 3 einzudrücken und einen Antrieb, der es erlaubt, die Andrückkörper von einer zentralen Stelle ausgehend, über die ganze Länge der Mündung der Kedernut 3 hinwegzuführen. Das Andruckelement der beiden Eindrückvorrichtungen 8, 8' ist dabei durch jeweils eine Rolle 6, 6' gebildet. Die Andrückschiene 7 ist an der Stelle, an der der Eindrückvorgang beginnt, absenkbar gestaltet, um die Eindrückvorrichtungen 8, 8' beim Einfügen der Zange 5 aus der Kedernut 3 herausheben zu können. Zu diesem Zweck können die Zange 5 und die betreffende Schiene mit den Eindrückvorrichtungen nach dem Absenken seitlich verschiebbar und gegeneinander austauschbar ausgebildet sein. Im Anschluss an das Einfügen der Zange 5 mit dem Keder 2, dem Einschnappen des Keders 2 in die Kedernut 3 und dem Herausziehen der Zange 5 aus der Kedernut 3 wird die Andrückschiene 7 an diese Stelle überführt, angehoben und der Keder 2 bodenschlüssig in die Kedernut 3 eingefügt. Sie befindet sich in dieser Position in einer Ebene mit den sich beiderseits anschließenden Bestandteilen der Andrückschiene 7. Die Andrückschiene 7 wird an dieser Stelle durch eine Vorrichtung gebildet, die relativ zu der übrigen Andrückschiene 7 absenkbar, auf deren Niveau anhebbar und im abgesenkten Zustand querbeweglich ist. Sie kann zugleich eine Hilfsvorrichtung für die separat anheb- und absenkbare Zange umfassen, was es erlaubt, die Zange 5 taktgesteuert zum Keder hinzuführen, diesen zu ergreifen, in die Kedernut einzufügen, die Zange unter Zurücklassung des Keders 2 in der Kedernut 3 zu entfernen und statt dessen die Eindrückvorrichtungen an ihrer Stelle auf den in die Kedernut 3 eingefügten Keder 2 aufzusetzen und in die Kedernut einzudrücken.

Die beiden Eindrückvorrichtungen 8, 8' wirken dabei mit Rollen 6, 6' auf den Keder 2 ein. Auch im unmittelbar aneinander anliegenden Zustand zu Beginn des Einfädelungsvorgangs verbleibt daher im Bereich des Außenumfangs eine keilförmig in Richtung des Keders erweiterte Öffnung. Diese ist mit entsprechend geformten Andrückschuhen der Eindrückvörrichtungen 8, 8' gefüllt, wie in Fig. 1 gezeigt, wodurch auch in diesem Bereich eine bodenbündige Andrückung des Keders 2 an den Boden der Kedernut gewährleistet ist.

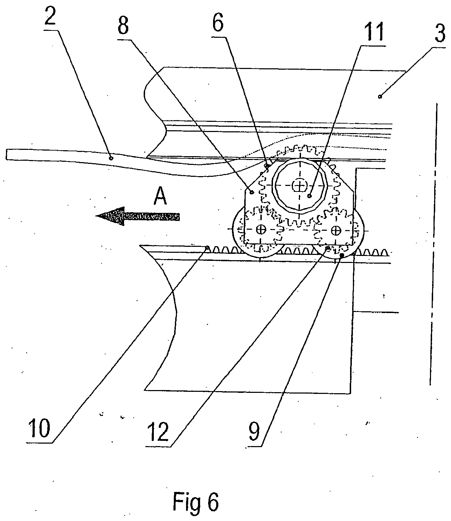

Die Rolle 6, 6' ist im Bereich des Außenumfangs mit einer sich quer zur Umfangsrichtung erstreckenden Zahnung versehen (Fig. 1, Fig. 6).

Die Eindrückvorrichtungen sind 8, 8' jeweils durch zwei in Bewegungsrichtung hintereinander angeordnete Stützrollen 9 auf der Eindrückschiene 7 geführt und abgestützt, wie in fast allen Fig. zu erkennen.

Die Eindrückschiene 7 umfasst eine Zahnstange 10. Auf ihr sind die Eindrückvorrichtungen 8, 8' rollbar geführt. Die Eindrückvorrichtungen 8, 8' umfassen jeweils ein Zahnrad, das mit der Zahnstange 7 in Eingriff steht (Fig. 1). Das Zahnrad und die Stützrollen 9 sind unverdrehbar miteinander verbunden. Sie drehen sich dadurch in der Eindrückvorrichtungen 8, 8' immer gemeinsam.

Ferner ist es vorgesehen, dass das Andrückelement durch eine mit einer Verzahnung versehene Rolle 6 gebildet ist, die durch das Zahnrad verdrehbar ist (Fig. 1).

Die Eindrückvorrichtungen sind durch Motoren 11, 11' verschiebbar, wobei es vorgesehen ist, dass die Motoren 11, 11' durch signalbetätigbare Elektromotoren gebildet sind, die einen Bestandteil der Eindrückvorrichtungen 8, 8' bilden.

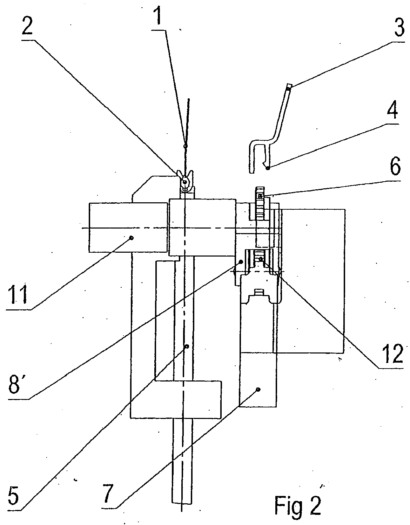

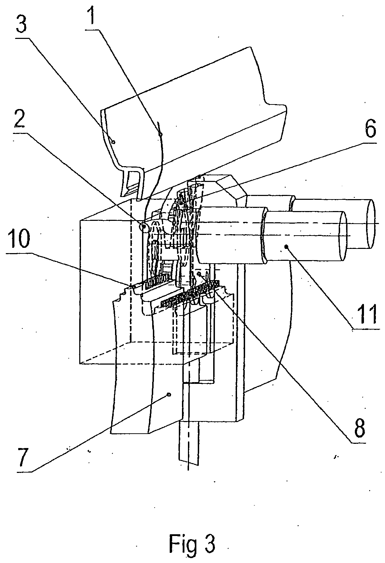

Zur Funktion ist folgendes auszuführen:
Im Anschluss an das Ergreifen (Fig. 1 und 2) und Einfädeln (Fig. 3) des mit dem textilen Träger 1 verbundenen Keders 2 mit der Zange 5 in die Kedernut 3 wird die Zange 5 zurückgezogen die Eindrückvorrichtungen 8, 8' angehoben und die darin gelagerten Rollen 6, 6' mit einem dazwischen angeordneten Andrückkeil auf den in die Kedernut 3 eingefügten Keder 2 aufgesetzt und angehoben, bis der Keder den Boden der Kedernut 3 anliegend berührt.

Anschließend werden die Eindrückvorrichtungen 8, 8' parallel zur Längsrichtung der Kedernut 3 über diese hinwegbewegt. Ein gleichbleibender Abstand der Eindrückvorrichtungen 8, 8' von der Kedernut wird dabei durch die Andrückschiene 7 bewirkt, auf der die Eindrückvorrichtungen 8, 8' geführt und abgestützt sind. Sie hat denselben Verlauf wie die Kedernut und kann zum Beispiel ringförmig in sich geschlossen ausgebildet oder um den Außenumfang eines Sitzes herumgeführt sein.

Um das Einfügen des Keders 2 am Beginn des Fügevorgangs zu erleichtern, können die Eindrückvorrichtungen 8, 8' am Beginn relativ zu der Andrückschiene 7 mit einem Ausschnitt der Andrückschiene 7 absenkbar ausgebildet sein, wie in Fig. 1 und Fig. 3 gezeigt.

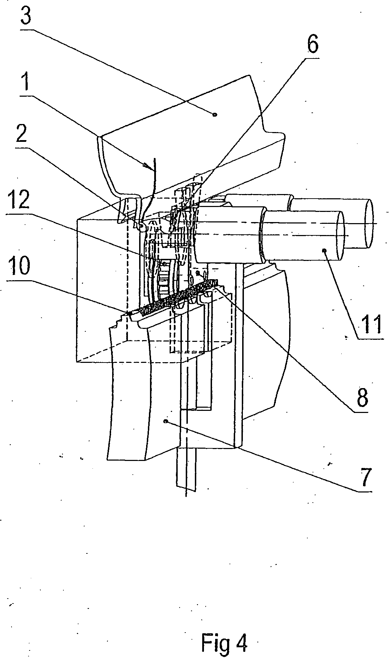

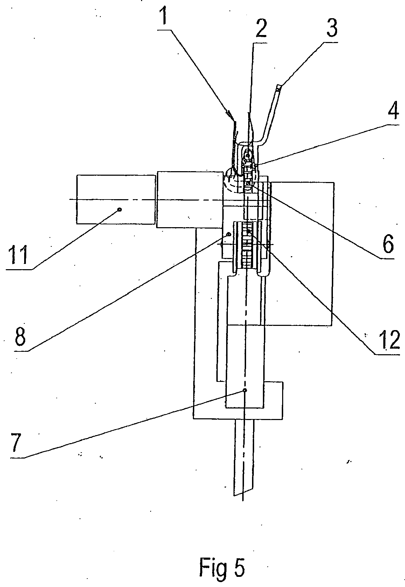

In Fig. 4 sind die Eindrückvorrichtungen 8, 8' auf das Niveau der Andrückschiene 8 angehoben, die eine Zahnstange 10 enthält, in die ein Zahnrad 12 einzugreifen vermag, das zugleich in Eingriff mit der gezahnten Eindrückrolle 6 steht. Letztere ist durch einen elektrischen Servomotor 11 verdrehbar. Der Querschnitt der Position ist in Bezug auf den Keder in Fig. 5 gezeigt.

Fig. 6 zeigt die Ausbildung der Eindrückvorrichtungen 8, 8' in einer Ansicht von der Seite. Es ist vor allem zu erkennen, dass die Eindrückvorrichtung 8, 8' durch die beiden hintereinander geführten Rollen 9 kippsicher ist und dass die als Zahnrad ausgebildete Eindrückrolle 6 durch die Rolle 9, die über das zwischengeschaltete Zahnrad 12 mit der Zahnstange 10 in Eingriff steht, in Drehverbindung steht. Beim Abwälzen der Rollen 9 auf der Andrückschiene 7 resultiert daraus eine Drehbewegung der Eindrückrollen 6, 6' der beiden Eindrückvorrichtungen 8, 8', die den Einfädelungsprozess begünstigt.

Vorliegend wird die Verdrehung der Zahnräder durch einen Servomotor 11 bewirkt, der unmittelbar auf die Eindrückrolle 6 einwirkt. Die Drehbewegung wird über das Zahnrad 12 auf die Zahnstange 10 übertragen, wodurch sich die Eindrückvorrichtungen 8, 8' aus der Startposition heraus entlang der Mündung 4 der Kedernut 3 bewegen und den Keder 2 fortschreitend darin einfädeln. Ein mit dem Keder verbundenes Textilgebilde, beispielsweise ein Sitzbezug, kann dadurch faltenfrei und straff auf ein Sitzkissen aufgespannt werden, ohne das es manueller Handgriffe bedarf.

Zweckmäßig sind alle motorischen Bewegungen, insbesondere aber diejenigen der Zange und der Eindrückvorrichtungen und er sie tragenden Hilfsvorrichtungen taktabhängig gekoppelt und gesteuert. Die Vorrichtung kann bei einer solchen Ausbildung auch vollautomatisch beschickt und betrieben werden.

## Patentansprüche

1. Verfahren zum Einfädeln eines am Rand eines flexiblen Flächengebildes (1) festgelegten Keders (2) quer in eine Kedernut (3), die im Bereich ihrer Mündung (4) mit einer Verengung versehen ist, **dadurch gekennzeichnet, dass** der Keder (2) im mittleren Bereich der Länge der Kedernut (3) von einer motorisch angetriebenen Zange (5) erfasst und unter temporärer, elastischer Aufweitung der Mündung (4) der Kedernut (3) in die Kedernut (3) eingeschnappt und die Zange (5) nachfolgend entfernt wird, dass der Keder (2) mit Hilfe von beiderseits der vorherigen Position der Zange (5) aufgesetzten Eindrückvorrichtungen an einen Boden der Kedernut (3) angelegt wird und dass der Keder (2) anschließend, von dieser Stelle ausgehend, zugleich in den beiden einander entgegengesetzten Richtungen A, B fortschreitend in die übrigen Bereiche der Kedernut (3) eingeschnappt wird.

2. Verfahren nach Anspruch 1, **dadurch gekennzeichnet, dass** der Keder (2) in mittleren Bereich der Länge der Kedernut (3) mit Hilfe einer Zange (5) in die Kedernut (3) eingefügt und ausgehend von dieser Stelle mit Hilfe von Rollen (6) in den beiden einander entgegensetzten Richtungen A, B fortschreitend in die übrigen Bereiche der Kedernut (3) eingeschnappt wird.

3. Verfahren nach Anspruch 1, **dadurch gekennzeichnet, dass** die Rollen (6) motorisch angetrieben werden.

4. Vorrichtung zum Einfädeln eines am Rand eines flexiblen Flächengebildes (1) festgelegten Keders (2) quer in eine Kedernut (3), die im Bereich Ihrer Mündung (4) mit einer Verengung versehen ist, nach einem der Ansprüche 1 bis 3, **dadurch gekennzeichnet, dass** eine motorisch angetriebene, signalbetätigbare Zange (5) zum Ergreifen und mittigen Einfügen des Keders (2) in die Kedernut (3) vorgesehen ist, dass in einem Abstand vor der Mündung (4) der Kedernut (3) eine sich parallel zu deren Längsrichtung erstreckende Andrückschiene (7) angeordnet ist, dass auf der Andrückschiene (7) zwei relativ verschiebbare Eindrückvorrichtungen (8, 8') gelagert sind und dass die Eindrückvorrichtungen (8, 8') zumindest ein Eindrückelement umfassen, dass es erlaubt, den Keder (2) fortschreitend in die Kedernut (3) einzudrücken und einen Antrieb, der es erlaubt, die Eindrückelemente, von einer zentralen Stelle ausgehend, über die ganze Länge der Mündung der Kedernut (3) hinwegzuführen.

5. Vorrichtung nach Anspruch 4, **dadurch gekennzeichnet, dass** das Eindrückelement durch eine Gleitkufe gebildet ist.

6. Vorrichtung nach Anspruch 4, **dadurch gekennzeichnet, dass** das Eindrückelement durch eine Rolle (6, 6') gebildet ist.

7. Vorrichtung nach Anspruch 4, **dadurch gekennzeichnet, dass** die Rolle (6, 6') im Bereich des Außenumfangs mit einer sich quer zur Umfangsrichtung erstreckenden Zahnung versehen ist.

8. Vorrichtung nach einem der Ansprüche 4 bis 7, **dadurch gekennzeichnet, dass** die Eindrückvorrichtungen (8, 8') jeweils durch zwei in Bewegungsrichtung hintereinander angeordnete Stützrollen (9) auf der Eindrückschiene (7) geführt und abgestützt sind.

9. Vorrichtung nach einem der Ansprüche 4 bis 8, **dadurch gekennzeichnet, dass** die Eindrückschiene (7) eine Zahnstange (10) und die Eindrückvorrichtungen (8, 8') ein Zahnrad umfassen, das mit der Zahnstange (7) in Eingriff steht.

10. Vorrichtung nach Anspruch 9, **dadurch gekennzeichnet, dass** das Zahnrad und die Stützrollen (9) unverdrehbar verbunden und nur gemeinsam verdrehbar sind.

11. Vorrichtung nach Anspruch 9 oder 10, bei dem das Andrückelement durch eine Rolle (6) gebildet ist, **dadurch gekennzeichnet, dass** die Rolle (6) durch das Zahnrad verdrehbar ist.

12. Vorrichtung nach einem der Ansprüche 4 bis 11, **dadurch gekennzeichnet, dass** die Eindrückvorrichtungen durch Motoren (11, 11') verschiebbar sind.

13. Vorrichtung nach Anspruch 12, **dadurch gekennzeichnet, dass** die Motoren (11,11') durch signalbetätigbare Elektromotoren gebildet sind, die einen Bestandteil der Eindrückvorrichtungen (8, 8') bilden.

## Claims

1. A method for transversely threading a weatherstrip (2), fixed on the edge of a flexible fabric (1), into a weatherstrip channel (3) which is provided with a constriction in the region of its outlet (4),
**characterised in that** the weatherstrip (2) is caught by a motor-driven gripper (5) in the central region of the length of the weatherstrip channel (3) and is snapped into the weatherstrip channel (3) as the outlet (4) of the weatherstrip channel (3) temporarily widens resiliently and the gripper (5) is subsequently removed, **in that** the weatherstrip (2) is applied to a base of the weatherstrip channel (3) by means of press-in devices attached on both sides of the previous position of the gripper (5) and **in that**,
starting from this position, the weatherstrip (2) is then progressively snapped into the remaining regions of the weatherstrip channel (3) at the same time in the two mutually opposite directions A, B.

2. A method according to claim 1, **characterised in that** the weatherstrip (2) is inserted into the weatherstrip channel (3) in the central region of the length of the weatherstrip channel (3) by means of a gripper (5) and, starting from this position, is progressively snapped into the remaining regions of the weatherstrip channel (3) by means of rollers (6) in the two mutually opposite directions A, B.

3. A method according to claim 1, **characterised in that** the rollers (6) are motor-driven.

4. A device for transversely threading a weatherstrip (2), fixed on the edge of a flexible fabric (1), into a weatherstrip channel (3) which is provided with a constriction in the region of its outlet (4) according to any one of claims 1 to 3, **characterised in that** a motor-driven, signal-actuatable gripper (5) is provided for gripping and centrally inserting the weatherstrip (2) into the weatherstrip channel (3), **in that** arranged at a distance upstream of the outlet (4) of the weatherstrip channel (3) is a pressing bar (7) which extends parallel to the longitudinal direction of the weatherstrip channel, **in that** mounted on the pressing bar (7) are two relatively displaceable press-in devices (8, 8') and **in that** the press-in devices (8, 8') comprise at least one press-in element which allows the weatherstrip (2) to be progressively pressed into the weatherstrip channel (3), and a drive which allows the press-in elements to be guided away, starting from a central position, over the entire length of the outlet of the weatherstrip channel (3).

5. A device according to claim 4, **characterised in that** the press-in element is formed by a skid.

6. A device according to claim 4, **characterised in that** the press-in element is formed by a roller (6, 6').

7. A device according to claim 4, **characterised in that** the roller (6, 6') is provided in the region of the outer circumference with a tooth system which extends transversely to the circumferential direction.

8. A device according to any one of claims 4 to 7, **characterised in that** the press-in devices (8, 8') are respectively guided and supported on the pressing bar (7) by two support rollers (9) which are arranged in tandem in the direction of movement.

9. A device according to any one of claims 4 to 8, **characterised in that** the pressing bar (7) comprises a toothed rack (10) and the press-in devices (8, 8') comprise a toothed wheel which meshes with the toothed rack (7).

10. A device according to claim 9, **characterised in that** the toothed wheel and the support rollers (9) are connected in a non-rotatable manner and can only be rotated together.

11. A device according to claim 9 or claim 10, wherein the pressure element is formed by a roller (6), **characterised in that** the roller (6) can be rotated by the toothed wheel.

12. A device according to any one of claims 4 to 11, **characterised in that** the press-in devices are displaceable by motors (11, 11').

13. A device according to claim 12, **characterised in that** the motors (11, 11') are formed by signal-actuatable electric motors which form part of the press-in devices (8, 8').

## Revendications

1. Procédé permettant d'enfiler un bourrelet de calfeutrage (2) fixé au bord d'une structure plane flexible (1) transversalement dans une rainure de bourrelet (3) qui est équipée d'un étranglement dans la zone de son ouverture (4),
**caractérisé en ce que**
le bourrelet (2) est saisi dans la zone médiane de la longueur de la rainure (3) par une pince (5) à entraînement motorisé, est enclenchée dans la rainure (3) avec élargissement élastique temporaire de l'ouverture (4) de cette rainure (3), et la pince (5) est ensuite enlevée, et **en ce que** à l'aide de dispositifs de poussée installés de part et d'autre de la position précédente de la pince (5), le bourrelet (2) est appliqué au fond de la rainure (3), et **en ce que**, à partir de cette position, le bourrelet (2) est ensuite simultanément enclenché dans les autres zones de la rainure (3) progressivement dans les deux directions opposées A, B.

2. Procédé conforme à la revendication 1,
**caractérisé en ce que**
le bourrelet (2) est emboîtée dans la rainure (3) à l'aide d'une pince (5) dans la zone médiane de la longueur de cette rainure, et à partir de cette position, est progressivement enclenché à l'aide de galets (6) dans les autres zones de la rainure (3) dans les deux directions opposées A, B.

3. Procédé conforme à la revendication 1,
**caractérisé en ce que**
les galets (6) sont à entraînement motorisé.

4. Dispositif permettant d'enfiler un bourrelet de calfeutrage (2) fixé au bord d'une structure plane flexible (1) transversalement dans une rainure de bourrelet (3) qui est équipée d'un étranglement dans la zone de son ouverture (4) conformément à l'une des revendications 1 à 3, **caractérisé en ce qu'**
il est prévu une pince (5) à entraînement motorisé pouvant être actionnée par un signal pour permettre la saisie et l'emboîtement médian du bourrelet (2) dans la rainure (3), **en ce que** à distance de l'ouverture (4) de la rainure (3) est installé un rail de pression (7) s'étendant parallèlement à sa direction longitudinale, **en ce que** sur le rail de pression (7) sont montés deux dispositifs de poussée (8, 8') mobiles en coulissement relatif, et **en ce que** les dispositifs de poussée (8, 8') comprennent au moins un élément de poussée permettant de pousser progressivement le bourrelet (2) dans la rainure (3), ainsi qu'un entraînement permettant de faire avancer les éléments de poussée à partir d'une position centrale sur la totalité de la longueur de l'ouverture de la rainure (3).

5. Dispositif conforme à la revendication 4,
**caractérisé en ce que**
l'élément de poussée est formé par un patin glissant.

6. Dispositif conforme à la revendication 4,
**caractérisé en ce que**
l'élément de poussée est formé par un galet (6, 6').

7. Dispositif conforme à la revendication 4,
**caractérisé en ce que**
le galet (6, 6') est équipé dans la zone de sa périphérie externe d'une denture s'étendant transversalement à la direction périphérique.

8. Dispositif conforme à l'une des revendications 4 à 7,
**caractérisé en ce que**
les dispositifs de poussée (8, 8') sont guidés et s'appuient respectivement sur le rail de pression (7) par l'intermédiaire de galets support (9) situés l'un derrière l'autre dans la direction de déplacement.

9. Dispositif conforme à l'une des revendications 4 à 8,
**caractérisé en ce que**
le rail de pression (7) comprend une crémaillère (10) et les dispositifs de poussée (8, 8') comprennent une roue dentée qui est en prise avec la crémaillère (7).

10. Dispositif conforme à la revendication 9,
**caractérisé en ce que**
la roue dentée et les galets support (9) sont reliés solidairement en rotation et ne peuvent tourner que conjointement.

11. Dispositif conforme à la revendication 9 ou 10,
dans lequel l'élément de poussée est formé par un galet (6),
**caractérisé en ce que**
le galet (6) peut être déplacé en rotation par la roue dentée.

12. Procédé conforme à l'une des revendications 4 à 11,
**caractérisé en ce que**
les dispositifs de poussée peuvent être déplacés par coulissement par des moteurs (11, 11').

13. Dispositif conforme à la revendication 12,
**caractérisé en ce que**
les moteurs (11, 11') sont formés par des moteurs électriques actionnables par un signal qui forment un composant des dispositifs de poussée (8, 8').
